# EUROPEAN PATENT APPLICATION

(11) **EP 3 608 623 A1**
(43) Date of publication of application: **12.02.2020**
(21) Application number: 18188450.3
(22) Date of filing: 10.08.2018
(51) Int. Cl.: G01B 5/06

(54) **MEASUREMENT DEVICE AND METHOD FOR ASSIGNING A BOOSTER CHILD SAFETY SEAT TO A MINIMUM BODY SIZE OF A CHILD**

(71) Applicant: BRITAX RÖMER Kindersicherheit GmbH, 89340 Leipheim (DE)
(72) Inventor: HENSELER, Richard, 89081 Ulm (DE); FRANK, Richard, 89275 Elchingen (DE)
(74) Representative: Richardt Patentanwälte PartG mbB

(57) **Abstract**

The invention relates to a measurement device (100) for assigning a booster child safety seat (406) to a minimum body size of a child, the device (100) comprising a seating surface (104) and a backrest (106) rigidly arranged to each other, the seating surface (104) being adapted for receiving the booster seat (406), the device (100) comprising a first arm (110), a second arm (112) and an axis (120) parallel to the planes defined by the seating surface (104) and the backrest (106), said first arm (110) being rotatably mounted about the axis (120), said second arm (112) being movable relative to the first arm (110) towards the direction (136) of the seating surface (104), said device (100) comprising a scale (200), said scale (200) assigning the relative displacement position of said first arm (110) and said second arm (112) to the minimum body size of the child, said second arm (112) having a contact surface (118) at its end facing in the direction of the seating surface (104).

## Description

### Field of the invention

Disclosed is a measurement device for assigning a booster child safety seat to a minimum body size of a child, a method for assigning a booster child safety seat to a minimum body size of a child, a measurement unit and a use of a measurement unit for assigning a booster child safety seat to a minimum body size of a child. Booster seats are used for securing children in vehicles such as cars or buses. Booster seats lift the children and allow the seatbelt of the vehicle to fit firmly across the collarbone and chest, with a lap portion fitted to the hips. Booster seats may have different sizes, therefore lifting children differently. Boosters can be distinguished between two types, namely a highback booster and a backless booster. Highback boosters provide improved head protection since the head and chest of the child are additionally secured by means of a seat back with side wings.

US 4,643,474 discloses a child's car backless booster seat that works with the automobile's existing safety belt restraint system. A highback booster seat is known, for example, from US 20170151894 A1.

### Summary

Disclosed is a measurement device for assigning a booster child safety seat to a minimum body size of a child, the device comprising a seating surface and a backrest rigidly arranged to each other, the seating surface being adapted for receiving the booster seat, the device comprising a measurement unit comprising a first arm, a second arm and an axis parallel to the planes defined by the seating surface and the backrest, said first arm being rotatably mounted about the axis, said second arm being movable relative to the first arm toward the direction of the seating surface, said unit comprising a scale, said scale assigning the relative displacement position of said first arm and said second arm to the minimum body size of the child, said second arm having a contact surface at its end facing in the direction of the seating surface.

The seating surface and the backrest are simulating a vehicle seat, for example the seat of a car. "Vehicle seat" means a structure, which may or may not be integral with the vehicle structure, complete with trim and intended to seat one adult person (in accordance with Regulation No. 129, Uniform provisions concerning the approval of enhanced Child Restraint Systems used on board of motor vehicles (ECRS), E/ECE/324/Rev.2/Add.128 - E/ECE/TRANS/505/Rev.2/Add.128).

In a car, the purpose of the seating surface is to receive the booster seat and the purpose of the booster seat is to permit a child to be seated on the booster seat with the child's back leaning on the backrest.

A movement of the second arm relative to the first arm toward the seating surface is understood as reversible movement in which the second arm can be moved forth and back toward the seating surface and away from the seating surface, all relative to the first arm.

Embodiments may have the benefit that a booster seat can be easily and reproducibly measured to determine the minimum recommended body size of a child to be placed in the booster seat. By positioning the booster seat on the seat surface in a position in which the seat is pushed as far as possible toward the backrest and the seating surface of the booster is in contact with the contact surface, the minimum recommended body size of the child can be obtained from the scale. Depending on the body size of a child, a different seating height provided by the booster may be recommendable. It may be beneficial to lift up the child so that the child is in the operating range of the head curtain airbag of the vehicle. An exemplary space in which the child's head should be placed could be the space located between 770 mm (position of a 5th-percentile female dummy's head) and 840 mm above the Cr point. The Cr point is defined as the virtual point of intersection between the plane defined by the seating surface and the backrest surface of the backrest, as for example defined in the above-mentioned Regulation No. 129, Uniform provisions concerning the approval of ECRS.

Thus, for every booster seat a recommendation on a preferable minimum body size of a child can be made such that the child's head is always located in the operating range of the head curtain airbag of a vehicle. Further, embodiments could provide a measuring device which will produce an identical result when the same booster is measured by different laboratories.

The booster seat may be a backless booster or a highback booster seat. In a preferred embodiment, the booster seat is the backless booster seat.

In accordance with an embodiment, the body size is a sitting height or a standing height of the child. The sitting height is the height of the child when sitting on a horizontal surface, as defined in the above-mentioned Regulation No. 129, Uniform provisions concerning the approval of ECRS. Generally, the body size may be directly indicated, for example in centimeters or meters on the scale, or provided via references to standardized dummy types, which themselves are assigned to, e.g., seating heights. For example, an indication of a Q6 dummy type would correspond to a minimum seating height of 601 mm, and an indication of a Q10 dummy type would correspond to a minimum seating height of 733.7 mm.

It may also be possible to provide an electronic e.g. digital, measurement means that determines the relative displacement position of the first arm and the second arm and that indicate the minimum body size on a display. The display may or may not be part of the measurement unit. The measurement means may record measurement values using a linear encoder. Linear encoders may be capacitive or inductive linear encoders. A liquid crystal display (LCD) may be employed for the numerical display, a microprocessor may be used for calculations on the recorded measurement signals, and a battery may be used as a power supply. For example, the measurement unit may have an interface by which the electronic measurement means can be coupled to a data processing system. The data processing system could evaluate the measurement results provided by the measurement means, and the result of the evaluation could be displayed on a computer screen or a dedicated display.

In accordance with an embodiment, the contact surface has a convex shape toward the seating surface. For example, the shape of the contact surface simulates the buttocks of a child. This could ensure that the assigning of a booster to a child's body height is as precise as possible, considering the child's natural anatomy.

In accordance with an embodiment, in the direction of the axis the width of the contact surface is larger than the width of the second arm. This may have the benefit that incorrect measurements could be avoided, e.g., by placing a very narrow contact surface on a recessed seam of the booster, whereas the actual seating surface of the booster located at the side of the seam is arranged considerably higher in relation to the seam. The width of the contact surface may allow for measurement over a wide width range of the booster without the second arm also having to be particularly wide and massive and therefore heavy. For example, in the direction of the axis the width of the contact surface is between 100 mm and 500 mm, preferably between 150 mm and 250 mm.

In accordance with an embodiment, the movability of the first arm relative to the second arm is a telescopic movability. This could allow a very space-saving structure of the unit.

In accordance with an embodiment, the scale is fixed to the first arm, the second arm comprises a pointer for the scale, and the pointer is adapted for indicating the relative displacement position of said first and second arms on the scale. For example, the first arm and the second arm comprise profiles engaging each other, wherein the pointer is given by an outer edge of the profile of the second arm pointing away from the contact surface. This may be beneficial in that in a constructionally simple manner a robust measurement unit can be provided. No fragile separate pointer is necessary here, which protects the measurement unit from being damaged, e.g., by accidental bending of the pointer.

In accordance with an embodiment, the axis is located in a direction facing away from the seating surface and above the backrest, e.g., above an upper outer edge of the backrest.

In accordance with an embodiment, the scale comprises a reference point, the reference point indicating a pre-calibrated relative displacement position of said first arm and said second arm, wherein in the pre-calibrated relative displacement position the contact surface of the second arm is in contact with the seating surface and the first arm is positioned parallel to the backrest surface of the backrest, wherein the scale is adjustable for matching the reference point to the pre-calibrated relative displacement position.

For example, during transport and delivery of the measurement unit, the height of the axis could be inadvertently displaced. The provision of the reference point may have the benefit that an accidental displacement of the height of the axle above the seat surface can be detected and corrected for.

In accordance with an embodiment, the second arm comprises a first stop with a first stop surface, wherein the first stop surface is adapted for being in contact with the backrest surface in the pre-calibrated relative displacement. This may have the benefit that, independent of the rotatability of the first arm and thus the second arm around the axis, the pre-calibrated relative displacement can be provided in an absolute manner. In the pre-calibrated relative displacement, the contact surface of the second arm is in contact with the seating surface and the first stop surface is in contact with the backrest surface. For example, the first stop is located between the second arm and the contact surface.

In accordance with an embodiment, the second arm comprises a contact element, the contact element comprising the contact surface, wherein in a direction perpendicular to the first contact surface, the forwardmost edge of the contact element facing toward the backrest is spaced from the first contact surface. For example, the forwardmost edge may be the edge of the convex shaped contact surface. Typically, boosters try to provide a comfortable sitting area, which in the direction toward the back of a child has a slight upward shape. In this respect, the normal sitting position on a booster is such that the child does not sit completely against the backrest with his lower back area. Thus, when the contact surface is in contact with the booster and moved (tilted around the axis) toward the backrest, the forwardmost edge will limit this movement such that the contact surface will be located in a position that corresponds to a typical position of a child in the booster. Therefore, the accuracy of measurements performed with the measurement unit may be enhanced.

In accordance with an embodiment, the measurement unit further comprises a frame comprising a boom, wherein the boom, the seating surface and the backrest are rigidly arranged on the frame. For example, the backrest is located between a plane defined by the seating surface and the boom. Further, the unit comprises a head slidably mounted on the boom, the head comprising the axis. This may be beneficial in that the natural head position of a child sitting on a booster and having the child's back leaned against the slightly reclining backrest is considered. In this position, the child will normally have his head in an upright vertical position while his back is reclined slightly backward. This will reduce the effective sitting height of the child.

For example, the seating surface is also angled relative to a horizontal plane by a "child restraint fixture pitch angle" as defined in the above-mentioned Regulation No. 129, Uniform provisions concerning the approval of ECRS. The slidability of the head is, e.g., in a direction that is, in the horizontal plane.

In accordance with an embodiment, the measurement unit further comprises a second stop with a second stop surface, the second stop surface protruding from the backrest surface of the backrest and, e.g., above an outer edge of the backrest. The second stop surface is adapted for being in contact with the first arm or the second arm in the pre-calibrated relative displacement, again starting from the same principle that the natural head position of a child sitting on a booster is considered. The second stop surface takes into account the natural inclination of the spine when the child's head is upright.

In accordance with an embodiment, the measurement device further comprises a frame, the axis being a non-shiftable axis mounted on the frame. In this embodiment, the axis is rigidly fixed on the frame, which may be beneficial in that fewer components are necessary to build the device. Even though this does not consider the above-mentioned natural vertical head position of a child sitting on a seating surface of the booster, the accuracy of providing the minimum body size of the child may still be sufficient since the difference in the seating height with and without having the head held upright may be negligible for various purposes.

In another aspect, a method is disclosed for assigning a booster child safety seat to a minimum body size of a child using the measurement device of any of the previous claims, the method comprising:
- positioning the booster seat on the seat surface in a position in which the seat is pushed as far as possible toward the backrest,
- contacting the seating surface of the booster with the contact surface,
- while the seating surface of the booster is in contact with the contact surface, moving the first arm and the second arm as far as possible toward the backrest, the moving resulting in a certain displacement position,
- determining from the displacement position, using the scale, the minimum body size of the child for the booster seat.

In accordance with an embodiment, the moving of the first arm and the second arm as far as possible toward the backrest further comprises moving the head such that the first arm or the second arm is in contact with the second stop surface.

In accordance with an embodiment, the method further comprises calibrating the measurement device, the calibrating comprising:
- positioning the contact surface of the second arm in contact with the seating surface of the booster with the first arm being positioned parallel to the backrest surface of the backrest, the positioning resulting in a relative displacement position of the first arm and the second arm,
- adjusting the scale for matching the reference point to the relative displacement position.

In another aspect, the invention relates to a measurement unit for assigning a booster child safety seat to a minimum body size of a child, the measurement unit comprising a first arm, a second arm and an axis, said first arm being rotatably mounted about the axis, said second arm being movable relative to the first arm, said unit comprising a scale, said scale assigning the relative displacement position of said first arm and said second arm to the minimum body size of the child, said second arm having a contact surface at its end. The purpose of the axis is to support the first arm rotatably on a frame.

In another aspect, the invention relates to a use of a measurement unit for assigning a booster child safety seat to a minimum body size of a child, the measurement unit comprising a first arm, a second arm and an axis, said first arm being rotatably mounted about the axis, said second arm being movable relative to the first arm, said unit comprising a scale, said scale assigning the relative displacement position of said first arm and said second arm to the minimum body size of the child, said second arm having a contact surface at its end.

It has to be further noted that the above-described embodiments and examples may be combined freely as long as the combinations are not mutually exclusive.

In the following, embodiments are described in greater detail by way of example only, referring to the drawings in which:
Fig. 1 shows a schematic of a measurement device in a cross-sectional view,
Fig. 2 shows a schematic of a measurement device in a front view,
Fig. 3 shows the top part of a measuring device in a perspective view,
Fig. 4 shows a measurement device together with a booster and a dummy sitting on the booster,
Fig. 5 shows a perspective view of a measuring device,
Fig. 6 shows a cross-section of a measuring device,
Fig. 7 shows a cross-section of a measuring device, and
Fig 8 shows a flowchart illustrating a method for operating a measuring device.

In the following, similar elements are denoted by the same reference numerals.

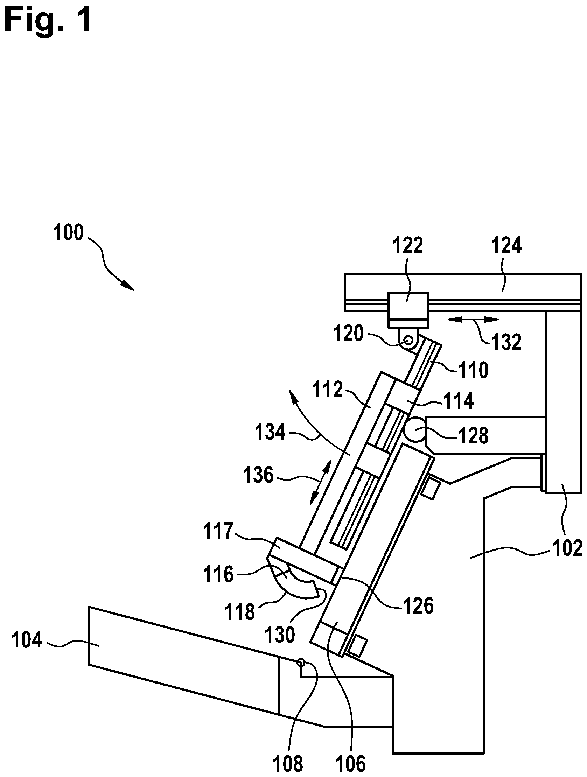

Fig. 1 is a schematic of a measuring device 100 in cross-sectional view. The measuring device comprises a frame 102 to which a seating surface 104 and a backrest 106 are rigidly fixed. The seating surface 104 is adapted for receiving a booster seat. The device 100 further comprises a first arm 110 and a second arm 112 which are movable relative to each other. In the example of Fig. 1, the first arm is telescopically movable relative to the second arm. For that purpose, the first arm and the second arm comprise profiles 114 engaging each other.

The first arm 110 is rotatably mounted about an axis 120 on the frame 102. The frame 102 comprises a boom 124, wherein a head 122 is slidably mounted on the boom 124 and which can be moved along the boom in direction 132. The two arms 110 and 112 can be moved relative to each other in direction 136, and the arm 110 and thus the arm 112 is pivotable around the axis 120 in direction 134.

The arm 112 comprises a contact element 116 which itself comprises a contact surface 118. The contact surface 118 faces in the direction of the seating surface 104. Further, the contact surface 118 has a convex shape toward the seating surface 104.

The contact element 116 is mounted to the arm 112 via a first stop 117, which has a first stop surface 126 facing the backrest 106. Further rigidly mounted to the frame 102 is a second stop 128 with a second stop surface, wherein the second stop surface protrudes from the surface of the backrest 106.

The first arm 110, the second arm 112, the profiles 114, the axis 120, the head 122, the contact element 116, the contact surface 118 and the second stop 128 form part of a measurement unit that can be provided to "upgrade" an existing setup comprising a seating surface 104 with backrest 106.

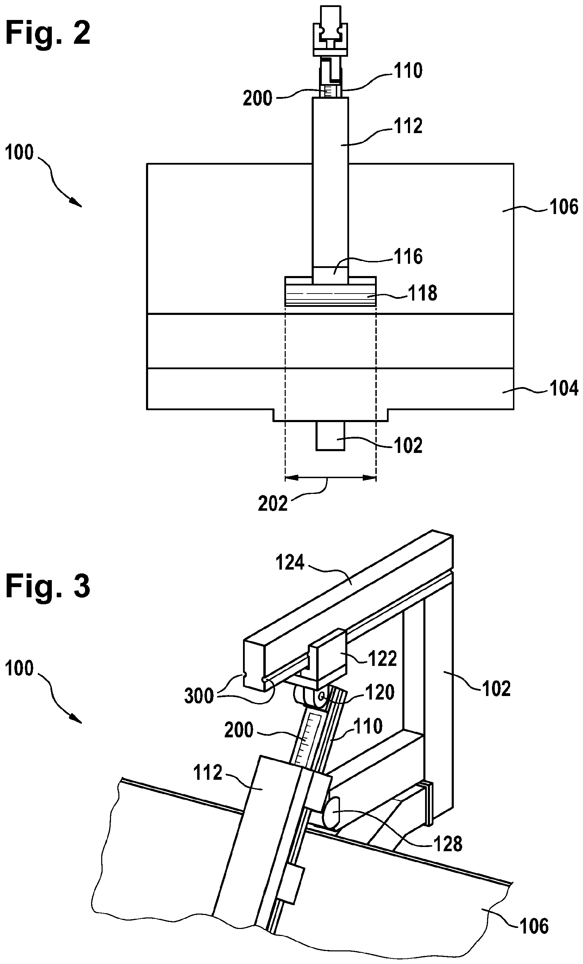

Fig. 2 is a schematic front view of the measurement device 100 of Fig. 1. Visible in Fig. 2 is a scale 200 that is attached to the arm 110. Further, it can be seen that the contact element 116 carrying the contact surface 118 has a width 202 that is wider than the width of the arms 110 and 112, respectively. The scale may be part of the measurement unit.

Fig. 3 is a perspective view of the measuring device 100 of Fig. 1 in more detail. The head 122 is slidable along the boom 124 in notches 300 provided by the boom 124. Thus, the head 122 engages in the notches 300.

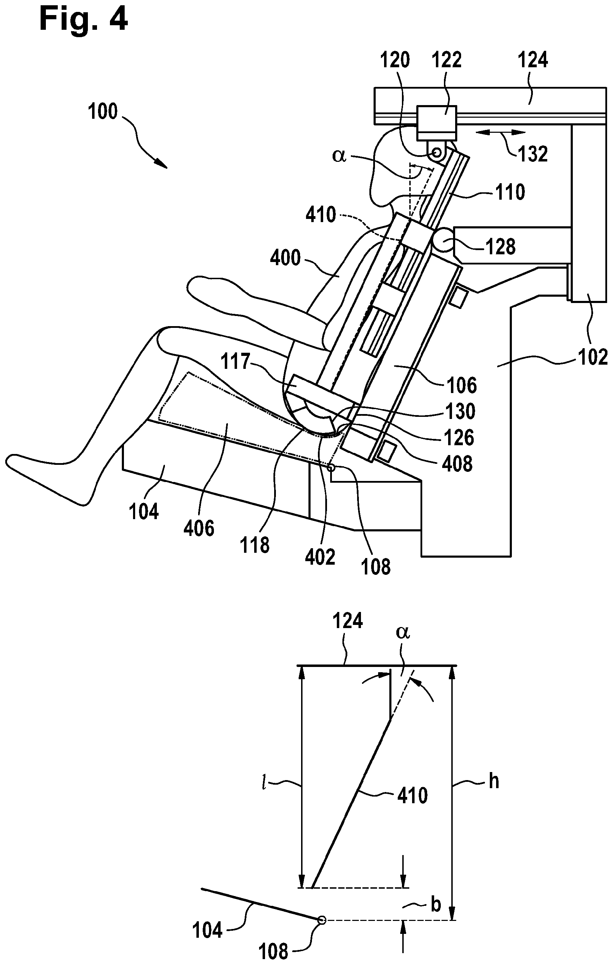

Fig. 4 is a further schematic view of the measurement device 100 of Fig. 1, wherein additionally a dummy 400 sitting on a booster 406 is depicted. It can be seen that the shape of the contact surface 118 is simulating the buttocks 402 of the dummy 400.

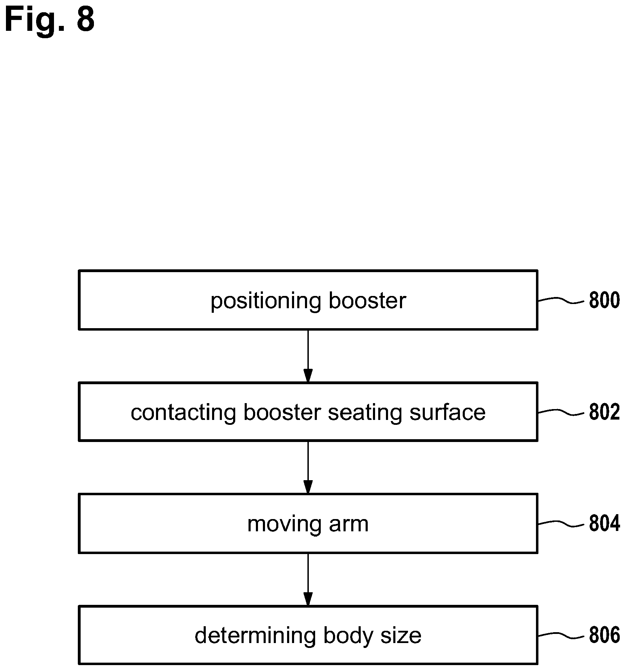

In the following, in combination with the flowchart of Fig. 8, an exemplary usage of the measurement device 100 will be described. The general purpose of the measuring device is to ensure that when the same booster 406 is measured by different laboratories, identical results will ensure that consistent booster seat recommendations on preferable minimum body size of a child that can use this given booster 406 can be made. Preferably, the booster lifts the child from the normal seating surface 104 of a vehicle so far that the child's head is located in the operating range of a head curtain airbag of the vehicle.

In block 800, the booster seat 406 is first positioned on the seat surface 104 in a position in which the booster seat 406 is pushed as far as possible toward the backrest 106. Then, in block 820, the seating surface of the booster seat is contacted with the contact surface 118. While the seating surface of the booster seat is in contact with the contact surface 118, in block 804 the first arm 110 and thus the second arm 112, respectively, are moved as far as possible toward the backrest 106. The movement is possible until the forwardmost edge 130 of the contact element 116 facing toward the backrest 106 is blocked by the part 408 of the seating area of the booster 406 that has the slightly upward shape. In this position, the contact surface imitates the position of the child's buttocks on the booster 406 in a reproducible manner. Further, by moving the head 122 along direction 132 it is ensured that in the example of Fig. 4, the first arm 110 gets in contact with the stop surface of the stop 128 protruding from the surface of the backrest 106. This stop 128 imitates the natural inclination of the spine when a child is sitting on the booster, as shown in Fig. 4. In this sitting position, the child has his head inclined by an angle α because the child's back is leaned against a slightly reclined backrest 106. This is the natural head position of a child sitting on a booster with inclined surfaces of the backrest 106 and the seating surface 104.

Due to the movement of the head in direction 132 and the movement of the contact surface 118, the first arm 110 is rotated around the axis 120, and further the first arm 110 and the second arm 112 undergo a relative displacement. This displacement is indicated on the scale 200. In block 806, the minimum body size of the child is determined from the scale, e.g., by reading the body size indicated on the scale and to which a pointer of the measuring device 100 is pointing.

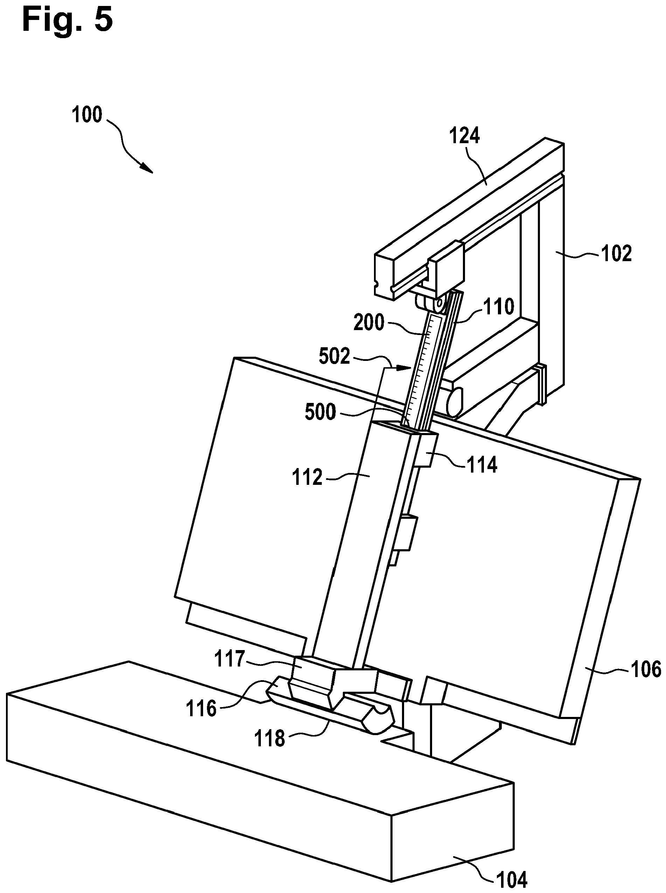

In Fig. 5, the scale 200 is fixed to the first arm 110, and the second arm 112 comprises an exemplary pointer 500, which in the example of Fig. 5 is given by an outer edge of the profile 114 that is used to engage the arm 112 to the arm 110. However, other kinds of pointers, such as the flag-like pointer 502 also shown in Fig. 5, are also possible. Further, the scale 200 may be mounted on the frame 102 or on the arm 112. In the latter case the pointer 502 may be attached to the arm 110. The pointers 500 and 502 may be part of the measurement unit

The inset of Fig. 4 depicts principles according to which the measuring device 100 is working. In Fig. 4 a line 410 is drawn through the dummy 400, which illustrates the inclination of the dummy's head by the angle α, and the corresponding sitting height is indicated in the inset of Fig. 4 as l. The scale 200 indicates this sitting height l under the assumption that the top of the skull of the dummy 400 touches the lower portion of the boom 124.

In the following, an exemplary calculation shall be made as follows, assuming that the vertical distance h between the so-called Cr point 108 and the bottom side of the boom 124 is 800 mm. This value of 800 mm corresponds to the height at which a child's head will be in the range of the head curtain airbag of a vehicle. Other values are possible. The Cr point 108 is defined as a virtual point of the intersection between the plane defined by the seating surface 104 and the backrest surface 106 against which the dummy is leaning in Fig. 4. Further, assuming that the dummy is a Q10 dummy with a sitting height of l = 733 mm, this requires a booster of height b = h - l = 800 mm - 733 mm = 67 mm. With a booster of the height of 67 mm, the dummy 400 and thus its head will be lifted so far that the head region of the dummy will be in the range of the head curtain airbag of a vehicle.

Last, by moving the contact surface 118 in the above-described manner onto the seating surface of the booster 406, for any type and height of booster it is possible to obtain from the scale 200 the minimum body size of a child that can sit on the booster 406 to have his head then located automatically in the operating range of a head curtain airbag of a vehicle, which is in the above example assumed to be around 770 mm to 800 mm.

Using the above-described principle and a predefined dummy with known body size, such as the above-mentioned Q10 dummy 400, it is possible to pre-calibrate the scale 200 once. Now it is possible to set the pointer 500 or 502 to the 733 mm value of the scale 200.

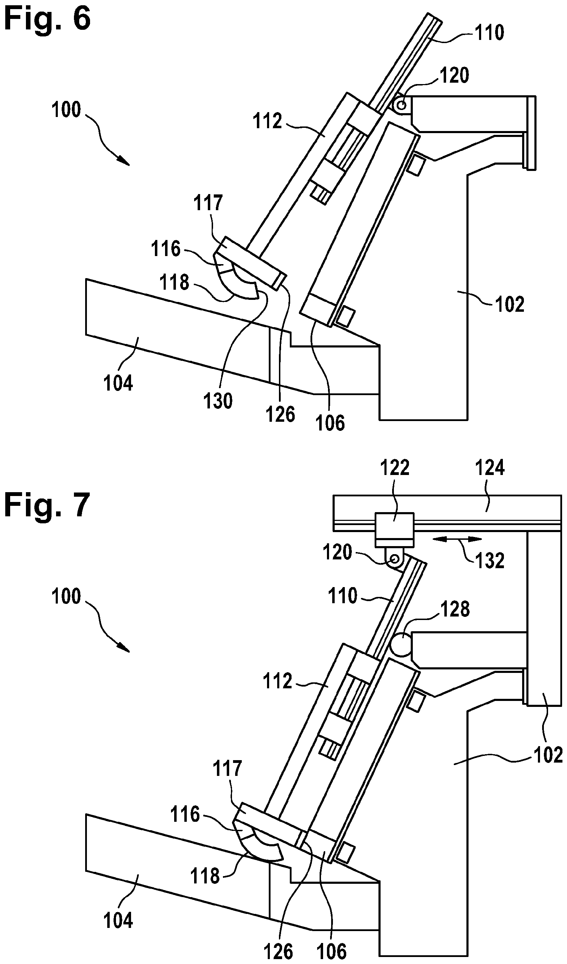

Fig. 6 is a schematic view of a further measurement device 100 in a cross-sectional view, wherein for this type of device the boom 124 was omitted and the axis 120 was directly mounted onto the frame 102 at the position where in Fig. 1 the second stop 128 was located.

The working principle of the measuring device 100 of Fig. 6 is similar to that discussed for the measuring device 100 of Fig. 4. Therefore, most principles apply accordingly as discussed above. A difference is that movability of the axis 120 in direction 132 is not possible since the axis 120 is mounted in Fig. 6 in a non-shiftable manner on the frame 102. Even though this does not consider the above-mentioned natural vertical head position of a child sitting on the seating surface of the booster, the accuracy of the provision of the minimum body size of the child may still be sufficient. At least the positioning of the axis considers the natural inclination of the spine when the child's head is upright and the child is leaning with his back on the inclined backrest 106. It has to be noted that the position of the axis 120 could also be more above or below this optimal point discussed with respect to Fig. 6. The measuring device should still work sufficiently well even though the accuracy is less than for the device of Fig. 4.

Since in the measurement device 100 of Fig. 6 the boom 124 is missing, which bottom side defines a stop for a top of the skull of the dummy, pre-calibration of the device 100 in Fig. 6 is not possible as discussed above with respect to Fig. 4. In order to pre-calibrate the device 100, i.e., to initially position the scale 200 correctly on the arm 110, in the example of Fig. 6 a reference booster 406 is required with a known geometry. For example, using the device 100 of Fig. 4, a standard dummy 400 and a booster 406 of well-known geometry could be measured. Taking the same booster 406 of Fig. 4 and the knowledge that a dummy 400 of sitting height 733 mm will exactly hit the 800 mm boundary, it is possible to position the booster on the seating surface 104, move the contact surface 118 onto the seating surface of the booster and push the arms 110 and 112 toward the backrest 106. In this case, the position where the pointer is pointing to on the scale will automatically correspond to the body size of the dummy 400 that was used in doing the pre-calibration using the device 100 of Fig. 4, i.e., the size of 733 mm.

It has to be noted that the pre-calibration process may be completely or partially performed virtually, i.e., on a computer, knowing the geometries of the measuring device 100. The dummy 400 may be virtual and/or the booster 406 may be virtual.

Fig. 7 depicts a measuring device 100 in a cross-sectional view which has to be calibrated. The difference between pre-calibration and calibration is that pre-calibration takes place initially using a dummy 400 with known body size in order to define the absolute position of the scale on the measurement device, i.e., on the arm 110. Calibration refers to an optional adjustment of the scale relative to a known reference mark that was set during the pre-calibration process as will be described below.

Calibration may be necessary, e.g., after transport and delivery of the measurement device where the vertical position of the axis 120 may have slightly changed. The basis for calibration is the previous pre-calibration, with some of the steps previously discussed with respect to Figs. 4 and 6. Additionally, pre-calibration may comprise moving the contact surface 118 onto the seating surface 104 without the presence of a booster 406. A stop 117, which comprises the arm 112 between the contact element 116 and the end of the arm 112, has a stop surface 126 which is then to be pressed against the surface of the backrest 106. Finally, the head 122 - if available - is moved in direction 132 such that the arm 110 gets in contact with the stop 128. In this configuration, the indication to which the pointer of the device is pointing on the scale is taken as a reference point. This reference point is indicating a pre-calibrated relative displacement position of the arms 110 and 112. It is apparent that in the case that the axis 120 is mounted as non-shiftable on the frame 102, the same principles apply without movement of the axis 120 in direction 132.

Thus, part of the pre-calibration process comprises optionally setting a reference point of the measurement device as follows, which holds true for both the device with the boom and without the boom: a dummy 400 may be virtually positioned in the measurement device such that the highest point of the dummy's head is at a predefined height, e.g., 800 mm, above a reference plane through the seating surface 104, for example through the Cr point 108. Then, a virtual booster seat 406 is selected that exactly fits between the child's buttocks and the seating surface 104. The booster seat is positioned on the seating surface in a manner that is pushed as far as possible toward the backrest 106. Then, the seating surface 104 of the virtual booster seat 406 is contacted with the contact surface 118. While the seating surface 104) of the booster seat 406 is in contact with the contact surface 118, the first arm 110 and the second arm 112 are moved virtually as far as possible toward the backrest 106, which results in a displacement position. Finally, the displacement position of the arms is assigned to the body size of the dummy 400.

For calibrating purposes, the same principles are applied; i.e., the surface 118 has to be brought in contact with the seating surface 104, the stop surface 126 has to contact the surface of the backrest 106, and the head 122 (if available) is to be moved in direction 132 such that the axis 110 gets in contact with the stop 128. In case the pointer is not pointing to the previously determined reference point, the scale may be shifted on the arm 110 such that the pointer is again pointing to the reference point.

List of reference numerals
- 100: device
- 102: frame
- 104: seating surface
- 106: backrest
- 108: cr point
- 110: arm
- 112: arm
- 114: profile
- 116: contact element
- 118: contact surface
- 117: stop
- 120: axis
- 122: head
- 124: boom
- 126: stop surface
- 128: stop
- 130: edge
- 132: direction
- 134: direction
- 136: direction
- 200: scale
- 202: width
- 300: notch
- 400: dummy
- 402: buttock
- 406: booster
- 408: inclined part of the booster
- 410: line
- 500: pointer
- 502: pointer

## Claims

1. Measurement device (100) for assigning a booster child safety seat (406) to a minimum body size of a child, the device (100) comprising a seating surface (104) and a backrest (106) rigidly arranged to each other, the seating surface (104) being adapted for receiving the booster seat (406), the device (100) comprising a measurement unit comprising a first arm (110), a second arm (112) and an axis (120) parallel to the planes defined by the seating surface (104) and the backrest (106), said first arm (110) being rotatably mounted about the axis (120), said second arm (112) being movable relative to the first arm (112) towards the direction (136) of the seating surface (104), said unit comprising a scale (200), said scale (200) assigning the relative displacement position of said first arm (110) and said second arm (112) to the minimum body size of the child, said second arm (112) having a contact surface (118) at its end facing in the direction of the seating surface (104).

2. The measurement device (100) of claim 1, the body size being a sitting height or a standing height of the child.

3. The measurement device (100) of any of the previous claims, the contact surface (118) having a convex shape towards the seating surface (104).

4. The measurement device (100) of any of the previous claims, wherein in the direction of the axis (120) the width of the contact surface (118) is larger than the width of the second arm (112).

5. The measurement device (100) of any of the previous claims, the movability of the first arm (110) relative to the second arm (112) being a telescopic movability.

6. The measurement device (100) of any of the previous claims, the scale (200) being fixed to the first arm (110), the second arm (112) comprising a pointer (500; 502) for the scale (200), the pointer (500; 502) being adapted for indieating the relative displacement position of said first arm (110) and second arm (112) on the scale (200), wherein optionally the first arm (110) and the second arm (112) are comprising profiles (114) engaging each other, the pointer (500; 502) being given by an outer edge of the profile of the second arm (112) pointing away from the contact surface (118).

7. The measurement device (100) of any of the previous claims, the axis (120) being located in a direction facing away from the seating surface (104) and above the backrest (106).

8. The measurement device (100) of any of the previous claims, the scale (200) comprising a reference point, the reference point indicating a pre-calibrated relative displacement position of said first arm (110) and said second arm (112), wherein in the pre-calibrated relative displacement position the contact surface (118) of the second arm (112) is in contact with the seating surface (104) and the first arm (110) being positioned parallel to the backrest (106) surface of the backrest (106), the scale (200) being adjustable for matching the reference point to the pre-calibrated relative displacement position.

9. The measurement device (100) of claim 8, the second arm (112) comprising a first stop (117) with a first stop surface (126), wherein the first stop surface (126) is adapted for being in contact with the surface of the backrest (106) in the calibrated relative displacement.

10. The measurement device (100) of claim 9, the contact surface (118) being arranged on the second arm (112) via the first stop (117), wherein optionally the second arm (112) is comprising a contact element (116), wherein the contact element (116) is comprising the contact surface (118), wherein in a direction perpendicular to the first contact surface (118), the forwardmost edge (130) of the contact element (116) facing toward the backrest (106) is spaced from the first contact surface (118).

11. The measurement device (100) of any of the previous claims, further comprising a frame (102) comprising a boom (124), the boom (124), the seating surface (104) and the backrest (106) being rigidly arranged on the frame (102), the unit further comprising a head (122) slidably mounted on the boom (124), the head (122) comprising the axis (120), wherein optionally the slidability is in a direction partially perpendicular to the backrest (106) surface of the backrest (106).

12. The measurement device (100) of claim 11, the unit further comprising a second stop (128) with a second stop surface, the second stop surface protruding the backrest surface of the backrest (106), the second stop surface being adapted for being in contact with the first arm (110) or the second arm (112) in the calibrated relative displacement.

13. The measurement device (100) of any of the previous claims 1-10, further comprising a frame (102), the axis (120) being a non-shiftable axis (120) mounted on the frame (102).

14. Method for assigning a booster child safety seat to a minimum body size of a child using the measurement device (100) of any of the previous claims, the method comprising:
- positioning the booster seat (406) on the seating surface in a position in which the booster seat (406) is pushed as far as possible towards the backrest (106),
- contacting the seating surface (104) of the booster seat (406) with the contact surface (118),
- while the seating surface (104) of the booster seat (406) is in contact with the contact surface (118), moving the first arm (110) and the second arm (112) as far as possible towards the backrest (106), the moving resulting in a displacement position,
- determining from the displacement position using the scale (200) the minimum body size of the child for the booster seat (406),
wherein optionally the moving of the first arm (110) and the second arm (112) as far as possible towards the backrest (106) is comprising moving the head (122) such that the first arm (110) or the second arm (112) are in contact with the second stop surface.

15. The method of claim 14, further comprising calibrating the measurement device (100), the calibrating comprising:
- positioning the contact surface (118) of the second arm (112) in contact with the seating surface (104) of the booster seat (406) with the first arm (110) being positioned parallel to the backrest (106) surface of the backrest (106), the positioning resulting in a relative displacement position of the first arm (110) and the second arm (112),
- adjusting the scale (200) for matching the reference point to the relative displacement position.

16. Measurement unit for assigning a booster child safety seat (406) to a minimum body size of a child, the measurement unit comprising a first arm (110), a second arm (112) and an axis (120), said first arm (110) being rotatably mounted about the axis (120), said second arm (112) being movable relative to the first arm (112), said unit comprising a scale (200), said scale (200) assigning the relative displacement position of said first arm (110) and said second arm (112) to the minimum body size of the child, said second arm (112) having a contact surface (118) at its end.

17. Use of a measurement unit for assigning a booster child safety seat (406) to a minimum body size of a child, the measurement unit comprising a first arm (110), a second arm (112) and an axis (120), said first arm (110) being rotatably mounted about the axis (120), said second arm (112) being movable relative to the first arm (112), said unit comprising a scale (200), said scale (200) assigning the relative displacement position of said first arm (110) and said second arm (112) to the minimum body size of the child, said second arm (112) having a contact surface (118) at its end.
